# EUROPEAN PATENT APPLICATION

(11) **EP 4 397 856 A1**
(43) Date of publication of application: **10.07.2024**
(21) Application number: 23150285.7
(22) Date of filing: 04.01.2023
(51) Int. Cl.: F03D 17/00

(54) **SYSTEM AND METHOD FOR DETERMINING AN EIGENMODE OF A WIND TURBINE ROTOR BLADE**

(71) Applicant: Siemens Gamesa Renewable Energy A/S, 7330 Brande (DK)
(72) Inventor: The designation of the inventor has not yet been filed
(74) Representative: SGRE-Association

(57) **Abstract**

There is described a system for determining an Eigenmode of a rotor blade of a wind turbine during operation, the wind turbine comprising a tower and at least one rotor blade. The system comprises (a) a plurality of blade clearance sensors, each blade clearance sensor being arranged and configured to provide a sensor signal indicative of a distance between the rotor blade and a corresponding predetermined position on the tower surface, and (b) a control unit coupled to receive the sensor signal from each of the blade clearance sensors and configured to determine the Eigenmode of the rotor blade based on the sensor signals and a plurality of predetermined sets of reference data, each predetermined set of reference data being representative of one corresponding Eigenmode. Furthermore, a wind turbine comprising such a system and a corresponding method are described.

## Description

### Field of Invention

The present invention relates to the field of wind turbines, edgein particular to systems for determining an Eigenmode of a rotor blade of a wind turbine during operation, the wind turbine comprising a tower and at least one rotor blade. The present invention further relates to a wind turbine comprising such a system, and to a method of determining an Eigenmode of a rotor blade of a wind turbine during operation.

### Art Background

Bending of a wind turbine rotor blade over its length depends on the load (external force) and the blade Eigenmode. With information on the Eigenmode it is thus possible to determine the current stress and health of a rotor blade. Furthermore, the risk of the rotor blade hitting the tower may be estimated as it is correlated to the Eigenmode. Hence, it is desirable to have such information available to a wind turbine controller.

Known systems for rotor blade health monitoring that utilize analysis of Eigenmodes during operation, such as described in international patent application WO 2011/029439 A1, rely on sensors, e.g., ultrasonic sensors, installed directly in the rotor blades. These systems suffer from complexity and bad serviceability. It is partly not possible to replace damaged sensor close to the rotor blade tip. It is also not possible to replace ultrasonic sensors by new, better versions. Lightning effects pose further disadvantages since sensors in the rotor blades can easily be damaged by direct and/or indirect effects of a lightning strike.

Thus, there may be a need for a simple and reliable way of determining the Eigenmode of a wind turbine rotor blade during operation, which does not suffer from the drawbacks mentioned above.

### Summary of the Invention

This need may be met by the subject matter according to the independent claims. Advantageous embodiments of the present invention are set forth in the dependent claims.

According to a first aspect of the invention, there is provided a system for determining an Eigenmode of a rotor blade of a wind turbine during operation, the wind turbine comprising a tower and at least one rotor blade. The system comprises (a) a plurality of blade clearance sensors, each blade clearance sensor being arranged and configured to provide a sensor signal indicative of a distance between the rotor blade and a corresponding predetermined position on the tower surface, and (b) a control unit coupled to receive the sensor signal from each of the blade clearance sensors and configured to determine the Eigenmode of the rotor blade based on the sensor signals and a plurality of predetermined sets of reference data, each predetermined set of reference data being representative of one corresponding Eigenmode.

This aspect of the invention is based on the idea that the blade clearance, i.e., the distance between rotor blade and tower, is measured by multiple blade clearance sensors arranged at known individual positions on the tower surface, i.e., at individual heights above ground level. Based on the measured clearance values (sensor signals) and a plurality of predetermined sets of reference data, the control unit determines the Eigenmode of the rotor blade. Thereby, each set of reference data is representative of one corresponding Eigenmode. In other words, the control unit compares the sensor signals with the predetermined sets of data to find out which one of the predetermined sets of data - and thereby a corresponding Eigenmode - exhibits the highest degree of similarity with the blade clearances indicated by the sensor signals.

According to an embodiment of the invention, the control unit is further configured to estimate a blade clearance profile based on the sensor signals, and to determine the Eigenmode by matching the estimated blade clearance profile with a profile corresponding to one of the predetermined sets of data.

In other words, the control unit uses the sensor signals to estimate a blade clearance profile, i.e., a shape of the rotor blade surface relative to the tower, e.g., by interpolating and/or extrapolating based on the sensors signals. Then, the control unit determines the Eigenmode by matching the estimated blade clearance profile with a profile corresponding to one of the predetermined sets of data. Thus, the Eigenmode is found by finding the set of predetermined data that corresponds to a blade profile having the highest degree of similarity with the estimated blade clearance profile.

According to a further embodiment of the invention, the control unit is configured to estimate the blade clearance profile by calculating a spline function based on the sensor signals.

The spline function provides a detailed blade clearance profile with reliable values along the entire rotor blade.

According to a further embodiment of the invention, the control unit is further configured to determine the Eigenmode by matching the sensor signals with one of the predetermined sets of reference data.

In this case, the predetermined set of reference data that is most similar to the received sensor signals is identified and the corresponding Eigenmode is determined as the result.

According to a further embodiment of the invention, matching comprises applying at least one of artificial intelligence, least squares method, and integrating a difference between the sensor data and the predetermined sets of data.

In other words, the best match between the received sensor signals or the corresponding blade clearance profile and one of the predetermined sets of data or the profile corresponding to the predetermined set of data is found by utilizing artificial intelligence, such as neural networks, a least squares method, or an integration of a difference between the sensor signals or corresponding blade clearance profile and the predetermined sets of data or the corresponding profiles.

While requiring more computational power, artificial intelligence also has the ability to learn and improve over time. On the other hand, least squares methods and integration require less resources while being able to provide very useful results.

According to a further embodiment of the invention, the plurality of blade clearance sensors are selected from the group consisting of RF sensors, optical sensors, and ultrasonic sensors.

The blade clearance sensors may in particular be implemented as leaky feeder sensors.

According to a further embodiment of the invention, each blade clearance sensor of the plurality of blade clearance sensors is configured to extend around a circumference of the tower in a corresponding position along a longitudinal axis of the tower.

Thereby, reliable distance measurements can be obtained for any orientation of the wind turbine rotor, i.e., for any yaw angle between 0° and 360°.

According to a further embodiment of the invention, each of the predetermined sets of data comprises a set of distance values, each distance value indicating a distance between the rotor blade and the position of a respective one of the clearance sensors.

In other words, the distance values of each predetermined set of data represent a distance between the rotor blade and one of the positions on the tower where a blade clearance sensor is arranged. Thereby, comparison or matching of the sensor signals and the sets of data may be particularly simple.

According to a further embodiment of the invention, each of the predetermined sets of data comprises a set of coefficients of a spline function representing a blade profile of a corresponding Eigenmode.

The coefficients of the spline function are a simple and compact format for storing the data without taking up excessive memory resources.

According to a further embodiment of the invention, the predetermined sets of data are obtained from a mathematical model of the rotor blade or from empirical data.

The mathematical model may in particular be a finite element model or another kind of mathematical model that allows for calculation of Eigenmodes and other characteristic parameter values in response to various loads. Such a mathematical model is may already be available from the design phase and may thus be easily obtained.

Alternatively, actual measurement data from a test rig or from actual operation may be used.

According to a further embodiment of the invention, the control unit is further configured to store a representation of the sensor data in a memory unit.

By storing the sensor data in memory, a set of historic data is obtained that may be useful for longtime assessments of the rotor blade and/or the general operation of the wind turbine.

According to a further embodiment of the invention, the control unit is further configured to update the predetermined sets of data based on the representations of sensor data stored in the memory unit.

In other words, the predetermined sets of data may be updated to closer reflect the reality. Thereby, the initial data obtained e.g., by simulation, may be improved.

According to a further embodiment of the invention, the control unit is further configured to detect changes in the Eigenmodes occurring over time based on the representations of sensor data stored in the memory unit.

Changes in the Eigenmodes of a rotor blade may be taken as an indication of wear or other potentially hazardous changes in the rotor blade and therefore constitute valuable information for the wind turbine control system and the operator.

According to a second aspect of the invention, there is provided a wind turbine. The wind turbine comprises (a) a tower, (b) at least one rotor blade, (c) a wind turbine controller, and (d) a system according to the first aspect or any of the above embodiments, wherein (e) the wind turbine controller is coupled to the control unit of the system in order to receive an indication of an Eigenmode of the at least one rotor blade.

This aspect of the invention is based on essentially the same idea as the first aspect discussed above and thus presents a wind turbine capable of determining an Eigenmode of the rotor blades in a simple and reliable manner, as discussed above.

According to a third aspect of the invention, there is provided a method of determining an Eigenmode of a rotor blade of a wind turbine during operation, the wind turbine comprising a tower and at least one rotor blade. The method comprises (a) arranging a plurality of blade clearance sensors at respective predetermined positions on the tower surface, each blade clearance sensor being configured to provide a sensor signal indicative of a distance between the rotor blade and the corresponding predetermined position on the tower surface, (b) receiving the sensor signal from each of the blade clearance sensors at a control unit, and (c) determining the Eigenmode of the rotor blade based on the sensor signals and a plurality of predetermined sets of reference data, each predetermined set of reference data being representative of one corresponding Eigenmode.

This aspect of the invention is based on essentially the same idea as the first aspect described above.

It is noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless otherwise indicated, in addition to any combination of features belonging to one type of subject matter also any combination of features relating to different subject matters, in particular to combinations of features of the method type claims and features of the apparatus type claims, is part of the disclosure of this document.

The aspects defined above and further aspects of the present invention are apparent from the examples of embodiments to be described hereinafter and are explained with reference to the examples of embodiments. The invention will be described in more detail hereinafter with reference to examples of embodiments. However, it is explicitly noted that the invention is not limited to the described exemplary embodiments.

### Brief Description of the Drawing

Figure 1 shows a block diagram illustrating a system according to an exemplary embodiment of the present invention.
Figure 2 shows a wind turbine equipped with the system according to the exemplary embodiment of the present invention shown in Figure 1.
Figure 3 shows a spline function representing a blade profile obtained in accordance with an exemplary embodiment of the present invention.
Figure 4 shows another spline function representing another blade profile obtained in accordance with an exemplary embodiment of the present invention.
Figure 5 shows a comparison of a blade profile with one reference profile in accordance with an exemplary embodiment of the present invention.
Figure 6 shows a comparison of the blade profile with another reference profile in accordance with an exemplary embodiment of the present invention.
Figure 7 shows a functional block diagram of a system according to an exemplary embodiment of the present invention.
Figure 8 shows a flow chart of a method according to an illustrative embodiment of the present invention.

### Detailed Description

The illustration in the drawing is schematic. It is noted that in different figures, similar or identical elements are provided with the same reference numerals or with reference numerals which differ only within the first digit.

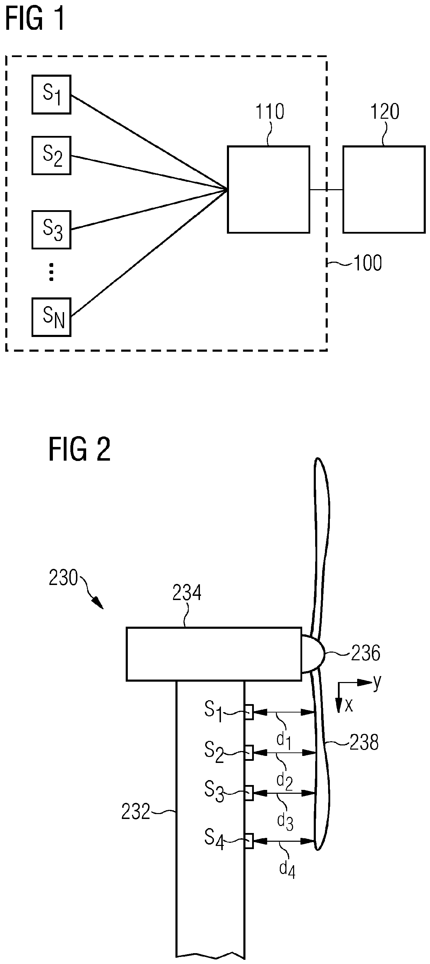

Figure 1 shows a block diagram illustrating a system 100 according to an exemplary embodiment of the present invention. More specifically, the system 100 comprises a plurality of blade clearance sensors S₁, S₂, S₃, S_{N} and a control unit 110. Each of the blade clearance sensors S₁, S₂, S₃, S_{N} is connected to the control unit 110 and configured provide a respective sensor signal indicative of a distance between a passing wind turbine rotor blade and a corresponding predetermined position on the wind turbine tower surface (not shown). As will be discussed in further detail below, the control unit 110 is configured to determine an Eigenmode of the rotor blade based on the received sensor signals and a plurality of predetermined sets of reference data which are stored in a memory of the control unit 110 or otherwise accessible to the control unit 110. Each predetermined set of reference data is representative of one corresponding Eigenmode of the wind turbine rotor blade. The control unit 110 is connected to a wind turbine controller 120 in order to provide the latter with information on the determined Eigenmode. Although the control unit 110 and the wind turbine controller 120 are shown as separate, distinct devices, the functionality of the control unit 110 may in some embodiments be integrated in the wind turbine controller 120, in particular as a software module.

Figure 2 shows a wind turbine 230 equipped with the system 100 shown in Figure 1 and discussed above. The wind turbine 230 comprises a tower 232, a nacelle, a hub, and rotor blades 238 as generally known in the art. Furthermore, four blade clearance sensors S₂, S₂, S₃, S₄ are arranged at different heights on the surface of the tower 232 in a region where the rotating rotor blades 238 will be passing by. It should be noted that any number of blade clearance sensors may be used and that the four sensors shown in Figure 2 is just an example. As indicated in the drawing, the height in the direction of the tower axis may be referred to as an x-coordinate while the direction corresponding to the distance d₁, d₂, d₃, d₄ between the sensors and the passing blade may be referred to as a y-coordinate. The blade clearance sensors S₁, S₂, S₃, S₄ may be any type of sensor device that is capable of determining the distances d₁, d₂, d₃, d₄ relative to the passing rotor blade 238, such as electromagnetic, RF, optical or acoustic sensors capable of determining the distances d₁, d₂, d₃, d₄ by applying radar or ranging techniques. In preferred embodiments, the sensors are selected from the group consisting of RF sensors, such as leaky feeders, optical sensors, and ultrasonic sensors. Furthermore, the blade clearance sensors S₁, S₂, S₃, S₄ are preferably configured to extend around the tower circumference at the corresponding height. Thereby, the blade clearance sensors S₁, S₂, S₃, S₄ can determine the distance tower and blade for any given wind direction and corresponding yaw angle.

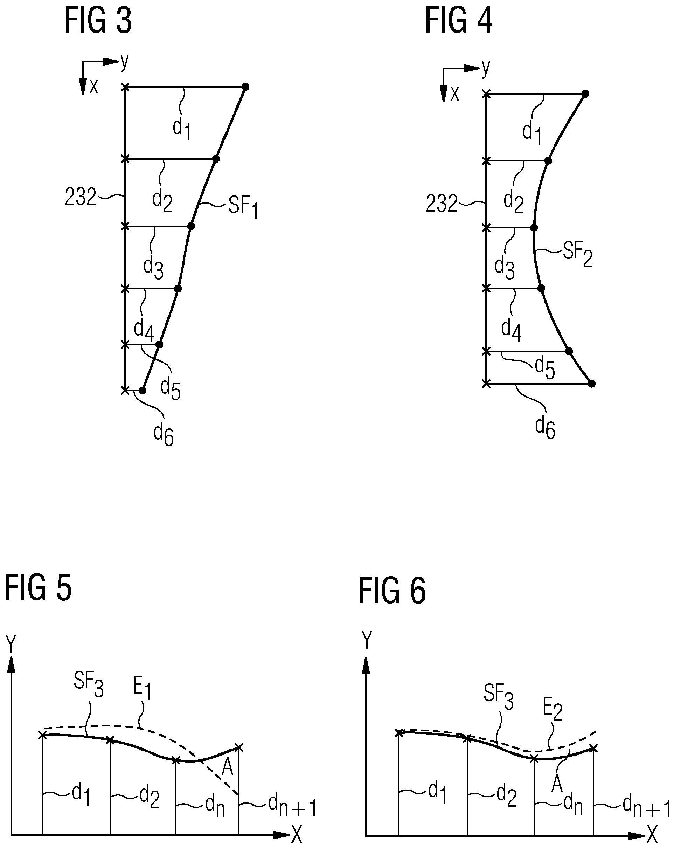

Figure 3 and Figure 4 show two spline functions SF₁ and SF₂ representing two different blade profiles obtained in accordance with an exemplary embodiment of the present invention. In this example, six distance values d₁, d₂, d₃, d₄, d₅, d₆ are available and the corresponding spline functions SF₁ and SF₂ are obtained by applying interpolation techniques as known in the art. The spline functions SF₁ and SF₂ may in particular be polynomials and the corresponding coefficients may be stored in memory over time, allowing provision of historical data without the need for excessive memory or other data storage resources.

Figure 5 shows a comparison of a blade profile represented by spline function SF₃ with one reference profile E₁ in accordance with an exemplary embodiment of the present invention.

More specifically, the comparison in this example consists in calculation of the area A between the functions SF₃ and E₁, e.g., by integration. Figure 6 shows a comparison of the same blade profile as in Figure 5 with another reference profile E₂. As can be seen, the calculated area A is significantly smaller in Figure 6. Hence, it can be concluded that E₂ is the better match of the two. Thus, in this simplified case, the control unit 110 determines that the Eigenmode of the rotor blade 238 is the one that corresponds to the reference profile E₂. Usually, there will be more than just two reference profiles. In any event, the reference profiles E₁, E₂ may be determined from virtual models of the rotor blade 238 or by measurements. The reference profiles are advantageously stored as spline function coefficients, e.g., in a look-up table (LUT), or in any other suitable form that allows easy storage and comparison with measurement data.

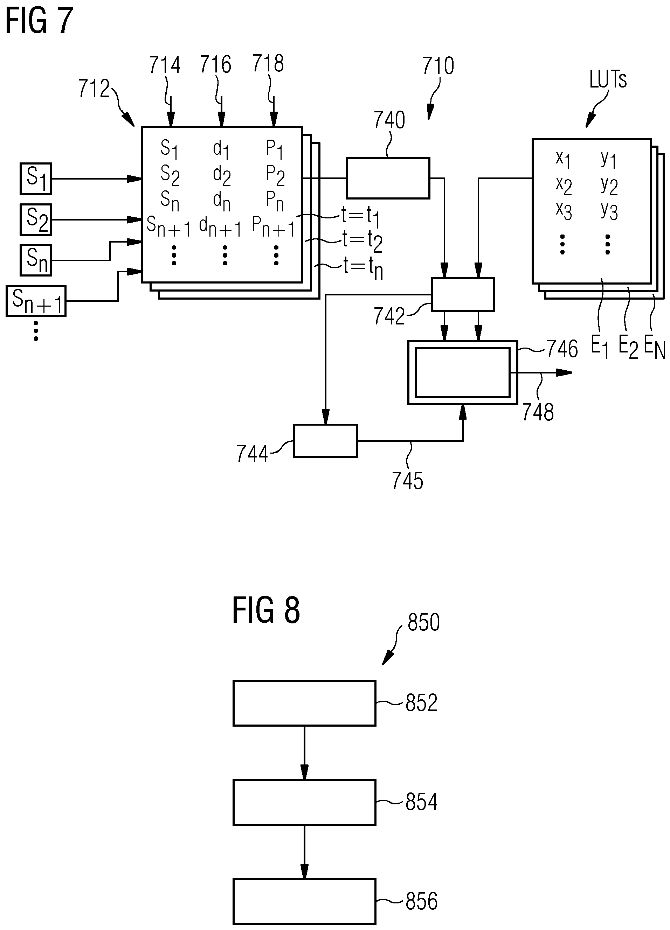

Figure 7 shows a functional block diagram of a system according to an exemplary embodiment of the present invention. More specifically, Figure 7 shows a plurality of blade clearance sensors S₁, S₂, Sₙ, Sₙ₊₁ and a more detailed structure of the control unit 710 corresponding to the control unit 110 shown in Figure 1. As indicated by 712, the control unit 710 obtains measurements from the blade clearance sensors S₁, S₂, Sₙ, Sₙ₊₁ at several instances in time and organizes the data in a corresponding table for each point in time, indicated as t=t₁, t=t₂, t=tₙ. Each data table comprises three columns, i.e., a column 714 with the sensor IDs or sensor numbers, a column 716 with the measured distances d₁, d₂, dₙ, dₙ₊₁, and a column 718 with the known positions p₁, p₂, pₙ, pₙ₊₁ (the height) of the sensors.

The control unit 710 further comprises an interpolation unit 740 or spline function generating unit 740 which calculates a blade profile (see e.g., Figure 3 and Figure 4) for each table of data, i.e., for each measurement time t. The control unit further comprises a set of LUTs (look-up tables) or reference data sets corresponding to a plurality of Eigenmodes E₁, E₂, E_{N}. As shown, each LUT may contain a set of coordinate pairs xᵢ, yᵢ corresponding to pairs of tower height and distance to the rotor blade. The spline function generated in the interpolation unit 740 and each of the sets of reference data in the LTUs are supplied to alignment unit 742 which applies the spline function to each of the x-values, i.e., x₁, x₂, x₃,... of the set of reference data E₁, E₂, E_{N} to calculate corresponding distance values in accordance with the spline function.

The thus calculated values are stored in memory or data storage 744 and supplied to processing unit 746 together with the set of reference data E₁, E₂, E_{N}. The processing unit 746 is configured to compare the calculated spline function values with the reference data E₁, E₂, E_{N} values in order to determine a degree of matching or similarity between the two set of values. This may be done by integration as shown in Figure 5 and Figure 6, by applying artificial intelligence, such as a neural network, by applying a least squares method, or any other suitable method for establishing a degree of similarity between the values originating from the spline function and the values originating from the set of reference data E₁, E₂, E_{N}.

After processing the spline function values with respect to each set of reference data E₁, E₂, E_{N}, the processing unit 746 identifies the best matching set of reference data E₁, E₂, E_{N} and the corresponding Eigenmode. The processing unit 746 outputs corresponding information 748, e.g., to a wind turbine controller 120. The output information 748 may also contain additional information, such as error information indicating a bad match between spline function values and values in the LUTs. Furthermore, the data in storage 744 may be analyzed to determine whether the spline function changes significantly over time. If this is the case, a corresponding message 745 may be supplied to the processing unit 748.

Figure 8 shows a flow chart 850 of a method according to an illustrative embodiment of the present invention, i.e., a method of determining an Eigenmode of a rotor blade, such as rotor blade 238 of the wind turbine 230 shown in Figure 2 during operation. The wind turbine 230 comprises a tower 232 and at least one rotor blade 238.

The method 850 begins at with arranging a plurality of blade clearance sensors S₁, S₂, S₃, S_{N} at respective predetermined positions p₁, p₂, p₃, pₙ on the tower surface. Each blade clearance sensor S₁, S₂, S₃, S_{N} is configured to provide a sensor signal indicative of a distance d₁, d₂, d₃, dₙ between the rotor blade 238 and the corresponding predetermined position on the tower surface.

The method 850 continues at 854 with receiving the sensor signal from each of the blade clearance sensors at a control unit 110, 710.

Finally, at 856, the Eigenmode of the rotor blade 238 is determined based on the sensor signals and a plurality of predetermined sets of reference data E₁, E₂, E_{N} as already discussed above. Each predetermined set of reference data is representative of one corresponding Eigenmode.

It is noted that the term "comprising" does not exclude other elements or steps and the use of the articles "a" or "an" does not exclude a plurality. Also elements described in association with different embodiments may be combined. It is further noted that reference signs in the claims are not to be construed as limiting the scope of the claims. Independent of the grammatical term usage, individuals with male, female or other gender identities are included within the term.

## Claims

1. A system (100) for determining an Eigenmode of a rotor blade (238) of a wind turbine (230) during operation, the wind turbine comprising a tower (232) and at least one rotor blade (238), the system comprising
a plurality of blade clearance sensors (S₁, S₂, S₃, S_{N}), each blade clearance sensor being arranged and configured to provide a sensor signal indicative of a distance (d₁, d₂, d₃, dₙ) between the rotor blade and a corresponding predetermined position (p₁, p₂, p₃, pₙ) on the tower surface, and
a control unit (110, 710) coupled to receive the sensor signal from each of the blade clearance sensors and configured to determine the Eigenmode of the rotor blade based on the sensor signals and a plurality of predetermined sets of reference data (E₁, E₂, E_{N}), each predetermined set of reference data being representative of one corresponding Eigenmode.

2. The system according to the preceding claim, wherein the control unit is further configured to estimate a blade clearance profile based on the sensor signals, and to determine the Eigenmode by matching the estimated blade clearance profile with a profile corresponding to one of the predetermined sets of data.

3. The system according to claim 2, wherein the control unit is configured to estimate the blade clearance profile by calculating a spline function (SF₁, SF₂, SF₃) based on the sensor signals.

4. The system according to claim 1, wherein the control unit is further configured to determine the Eigenmode by matching the sensor signals with one of the predetermined sets of reference data.

5. The system according to any of claims 2 to 4, wherein matching comprises applying at least one of artificial intelligence, least squares method, and integrating a difference between the sensor data and the predetermined sets of data.

6. The system according to any of the preceding claims, wherein the plurality of blade clearance sensors are selected from the group consisting of RF sensors, optical sensors, and ultrasonic sensors.

7. The system according to any of the preceding claims, wherein each blade clearance sensor of the plurality of blade clearance sensors is configured to extend around a circumference of the tower in a corresponding position along a longitudinal axis of the tower.

8. The system according to any of the preceding claims, wherein each of the predetermined sets of data comprises a set of distance values, each distance value indicating a distance between the rotor blade and the position of a respective one of the clearance sensors.

9. The system according to any of claims 1 to 8, wherein each of the predetermined sets of data comprises a set of coefficients of a spline function representing a blade profile of a corresponding Eigenmode.

10. The system according to any of the preceding claims, wherein the predetermined sets of data are obtained from a mathematical model of the rotor blade or from empirical data.

11. The system according to any of the preceding claims, wherein the control unit is further configured to store a representation of the sensor data in a memory unit.

12. The system according to the preceding claim, wherein the control unit is further configured to update the predetermined sets of data based on the representations of sensor data stored in the memory unit.

13. The system according to claim 11 or 12, wherein the control unit is further configured to detect changes in the Eigenmodes occurring over time based on the representations of sensor data stored in the memory unit.

14. A wind turbine (230) comprising
a tower (232),
at least one rotor blade (238),
a wind turbine controller (120), and
a system (100) according to any of the preceding claims,
wherein the wind turbine controller is coupled to the control unit of the system in order to receive an indication of an Eigenmode of the at least one rotor blade.

15. A method (850) of determining an Eigenmode of a rotor blade (238) of a wind turbine (230) during operation, the wind turbine comprising a tower (232) and at least one rotor blade (238), the method comprising:
arranging (852) a plurality of blade clearance sensors (S₁, S₂, S₃, S_{N}) at respective predetermined positions (p₁, p₂, p₃, pₙ) on the tower surface, each blade clearance sensor being configured to provide a sensor signal indicative of a distance (d₁, d₂, d₃, dₙ) between the rotor blade and the corresponding predetermined position on the tower surface,
receiving (854) the sensor signal from each of the blade clearance sensors at a control unit (110, 710), and
determining (856) the Eigenmode of the rotor blade based on the sensor signals and a plurality of predetermined sets of reference data (E₁, E₂, E_{N}), each predetermined set of reference data being representative of one corresponding Eigenmode.
